# EUROPÄISCHE PATENTSCHRIFT

(11) **EP 2 250 386 B1**
(45) Veröffentlichungstag und Bekanntmachung des Hinweises auf die Patenterteilung: **17.04.2013**
(21) Anmeldenummer: 09714404.2
(22) Anmeldetag: 25.02.2009
(51) Int. Cl.: F16D 25/08, F16D 29/00, B60K 6/387

(54) **KUPPLUNG SOWIE HYBRIDANTRIEB MIT KUPPLUNG**
CLUTCH AND HYBRID DRIVE WITH CLUTCH
EMBRAYAGE ET ENTRAÎNEMENT HYBRIDE AVEC EMBRAYAGE

(30) Priorität: 29.02.2008 DE 102008000464
(43) Veröffentlichungstag der Anmeldung: 17.11.2010
(73) Patentinhaber: Robert Bosch GmbH, 70442 Stuttgart (DE)
(72) Erfinder: TELLERMANN, Uwe, 70499 Stuttgart-Weilimdorf (DE); SCHMOLL GENANNT EISENWERTH, Kaspar, 74343 Sachsenheim (DE)
(86) Internationale Anmeldenummer: PCT/EP2009/052210
(87) Internationale Veröffentlichungsnummer: WO 2009/106538

(56) Entgegenhaltungen:
- EP-A- 1 400 716
- EP-A- 1 852 625
- DE-A1- 3 832 182
- DE-A1- 4 302 846
- DE-A1- 10 313 450
- DE-A1-102004 030 005

## Beschreibung

### Stand der Technik

Die Erfindung betrifft eine Kupplung gemäß dem Oberbegriff des Anspruchs 1 sowie einen Hybridantrieb, insbesondere für ein Kraftfahrzeug, gemäß dem Oberbegriff des Anspruchs 11.

Eine solche kupplung ist aus DE-A-4302846 bekannt.

Bei konventionellen Antriebssträngen in Kraftfahrzeugen werden Drehzahlunterschiede beim Anfahren und während einer Schaltung durch Reibkupplungen bzw. Drehzahlwandler ausgeglichen. Hybridantriebe erweitern den konventionellen Antriebsstrang um eine elektrische Maschine, die über eine zusätzlich schaltbare Kupplung, eine so genannte Startkupplung, mit dem Verbrennungsmotor verbunden werden kann.

Häufig werden automatisierte, elektro-hydraulische Kupplungen als Startkupplung eingesetzt. Eine geeignete Betriebsstrategie steuert bei einem Hybridantrieb die zusätzliche Startkupplung so, dass in ausgewählten Fahrsituationen auch ein rein elektrisches Fahren und Bremsen möglich ist. Die zusätzliche Startkupplung wird auch eingesetzt, um den Verbrennungsmotor bei Bedarf wieder zu starten. Die Startkupplung ist dabei so ausgeführt, dass sie im Fehlerfall (drucklos) geschlossen ist (normally closed). Auf diese Weise ist bei Fehlerfällen, wie einer Leckage oder einem Hardwaredefekt des Stellers der Startkupplung ein konventionelles Fahren weiterhin möglich. Für die Energierückgewinnung im Schubbetrieb (Rekuperieren) ist es vorteilhaft, die Schleppmomente des Verbrennungsmotors zu entkoppeln. Daher wird in diesem Fahrzeugzustand die Startkupplung geöffnet und offengehalten. In Abhängigkeit von der verwendeten Betriebsstrategie kann die Offenhaltezeit im europäischen Fahrzyklus (NEFZ) bis zu 50 % betragen. Bei der Hälfte der Betriebszeit muss die Startkupplung also gegen eine Schließfederkraft offengehalten werden. Bekannte Startkupplungen benötigen dabei eine Leistungsaufnahme von etwa 30 W, um die Startkupplung offenzuhalten. Es müssen also 30 W konstant in 50% der Betriebszeit aufgebracht werden, um die Startkupplung offenzuhalten. Hieraus resultiert ein zusätzlicher, nicht unerheblicher Kraftstoffverbrauch.

### Offenbarung der Erfindung

### Technische Aufgabe

Der Erfindung liegt daher die Aufgabe zugrunde, eine schaltbare Kupplung zum Koppeln und Entkoppeln eines Verbrennungsmotors mit einem eine elektrische Maschine aufweisenden Teiltriebstrang vorzuschlagen, deren Energiebedarf vermindert ist. Ferner besteht die Aufgabe darin, einen entsprechend optimierten Hybridantrieb, insbesondere für ein Kraftfahrzeug, vorzuschlagen.

### Technische Lösung

Diese Aufgabe wird hinsichtlich der schaltbaren Kupplung mit den Merkmalen des Anspruchs 1 und hinsichtlich des Hybridantriebs mit den Merkmalen des Anspruchs 11 gelöst. Vorteilhafte Weiterbildungen der Erfindung sind in den Unteransprüchen angegeben.

Der Erfindung liegt der Gedanke zugrunde, einem verstellbaren Element der Verstellmittel der Kupplung zum Öffnen der Kupplungsmittel eine mechanische Arretierung zuzuordnen, die im Offenhaltepunkt der Verstellmittel blockierend auf deren verstellbares Element einwirkt. Im Gegensatz zu einer alternativen Lösung, bei der dem verstellbaren Element eine selbsthemmend ausgeführte Spindel zugeordnet ist, können durch das Vorsehen von ein verstellbares Arretierelement aufweisenden Arretiermitteln sämtliche Anforderungen an die Dynamik, die Leistungsaufnahme und die Halteenergie, insbesondere den Haltestrom, der, vorzugsweise als Startkupplung zum Starten des Verbrennungsmotors ausgebildeten Kupplung, erfüllt werden. Die Energieeinsparung einer nach dem Konzept der Erfindung ausgebildeten schaltbaren Kupplung beruht darauf, dass zumindest ein Teil der zum Offenhalten der Kupplungsmittel erforderlichen Kräfte von dem verstellbaren Arretierelement der Arretiermittel bereitgestellt werden, so dass der Energiebedarf der Verstellmittel zum Offenhalten der Kupplungsmittel zumindest reduziert ist.

Im Hinblick auf das Zusammenwirken der Arretiermittel mit dem mindestens einen verstellbaren Element der Verstellmittel, bzw. im Hinblick auf die Ausbildung der Arretiermittel und/oder des verstellbaren Elementes gibt es zwei mögliche Alternativen. Bei einer ersten möglichen Ausführungsform wirkt das verstellbare Arretierelement derart mit dem mindestens einen verstellbaren Element der Verstellmittel zusammen, dass die Verstellmittel zum Offenhalten der Kupplungsmittel entgegen der von Schließmitteln, insbesondere mindestens einer Feder, vorzugsweise mindestens einer Tellerfeder, erzeugten Schließkraft, keine Energie aufwenden müssen. Anders ausgedrückt, wird bei dieser ersten Realisierungsmöglichkeit die komplette Offenhaltungskraft von den Arretiermitteln bereitgestellt. Das verstellbare Element der Verstellmittel wird also in einer geöffneten Position der Kupplungsmittel durch das mindestens eine Arretierelement vollständig fixiert. Für den Fall, dass zum Verstellen des verstellbaren Elementes der Verstellmittel ein elektrischer Antrieb vorgesehen ist, kommt das System bei der zuvor beschriebenen, ersten Ausführungsform vollständig ohne einen Haltestrom aus, wodurch insgesamt die CO₂-Emmission erheblich minimiert werden kann.

Gemäß einer zweiten möglichen Ausführungsform sind die Arretierungsmittel so ausgeführt, dass die durch sie aufgebrachte, blockierende (hemmende) auf das verstellbare Element der Verstellmittel wirkende Kraft kleiner (vorzugsweise geringfügig kleiner) ist als die auf das verstellbare Element in Schließrichtung wirkende Kraft, so dass ein Offenhalten der Kupplungsmittel mit einem (sehr) geringen Energieeinsatz (vorzugsweise einem geringen Haltestrom) realisiert werden kann. Auch bei dieser Ausführungsform ist der Energiebedarf der Kupplung im Vergleich zu Kupplungen nach dem Stand der Technik minimiert. Im Falle des Versagens der Verstellmittel, insbesondere eines elektrischen Antriebs der Verstellmittel, würden bei der zweiten Ausführungsform die Kupplungsmittel selbsttätig ohne weitere Maßnahmen schließen, so dass auf einfache Weise eine mögliche Anforderung des "normally closed" realisiert ist. Die Schließmittel, insbesondere mindestens eine Feder, vorzugsweise mindestens eine Tellerfeder, würden bei einem Versagen des Antriebs der Verstellmittel der zweiten beschriebenen Ausführungsform die Kupplungsmittel automatisch schließen.

In Weiterbildung der Erfindung ist vorgesehen, dass das Arretierelement der Arretiermittel zwischen einer Formschlussposition, in der das Arretiermittel formschlüssig mit dem verstellbaren Element der Verstellmittel zusammenwirkt und einer Freigabeposition verstellbar ist. Zusätzlich oder alternativ kann mit Hilfe des mindestens einen arretierbaren Elementes ein Reibschluss realisiert werden.

Um zum Verstellen des Arretierelementes in seine Formschlussposition (alternativ Reibschlussposition) keine elektrische oder hydraulische Energie zu benötigen, ist gemäß einer bevorzugten Ausführungsform vorgesehen, dass die Arretiermittel mindestens ein Federelement umfassen, dass das Arretierelement in Richtung des verstellbaren Elementes der Verstellmittel, vorzugsweise in radialer Richtung bezogen, auf eine Verstellrichtung des verstellbaren Elementes, federkraftbeaufschlagt. Diese Ausführungsform ist insbesondere deshalb vorteilhaft, als dass das Arretierelement nicht separat angesteuert werden muss, sondern dass sich dieses, sobald sich das verstellbare Element in seiner Öffnungsposition befindet, automatisch formschlüssig (alternativ reibschlüssig) mit dem verstellbaren Element der Verstellmittel, das verstellbare Element hemmend bzw. blockierend zusammenwirkt.

Um ein definiertes Halten des verstellbaren Elementes durch das mindestens eine Arretiermittel in der Öffnungsposition der Kupplungsmittel bzw. der Öffnungsposition des verstellbaren Elementes zu gewährleisten, ist in Weiterbildung der Erfindung mit Vorteil vorgesehen, dass das Arretierelement in seiner Formschlussposition in einer Ausnehmung des verstellbaren Elementes aufgenommen ist. Bevorzugt ist das Arretierelement hierzu bolzenförmig ausgebildet. Zusätzlich oder alternativ zur abschnittsweisen Aufnahme des Arretierelementes in eine Ausnehmung des verstellbaren Elementes ist es möglich, dass das Arretierelement bei geöffnetem verstellbarem Element an der Stirnseite des verstellbaren Elementes angreift und das verstellbare Element auf diese Weise blockiert.

Um ein relatives Verdrehen des verstellbaren Elementes zu dem Arretierelement zu ermöglichen, ohne die Blockierfunktion zu beeinträchtigen, ist eine Ausführungsform bevorzugt, bei der die Ausnehmung als Nut, vorzugsweise als vollständig um das verstellbare Element umlaufende, Umfangsnut ausgebildet ist, so dass das Arretierelement in jeder relativen Drehposition des verstellbaren Elementes relativ zu dem mindestens einen Arretierelement das verstellbare Element in seiner Öffnungsstellung blockieren kann.

Die hemmende bzw. blockierende, einem Schließen des verstellbaren Elementes der Verstellmittel entgegenwirkende Kraft kann über die Tiefe und Form der Ausnehmung, mit der das mindestens eine Arretierelement zusammenwirkt und/oder die Wahl der auf das Arretierelement wirkenden Federkraft und/oder die Form des mit dem verstellbaren Element der Verstellmittel zusammenwirkenden Abschnitts, insbesondere der Spitze, des mindestens einen Arretierelementes eingestellt werden. Durch die Wahl der vorgenannten Parameter ist die resultierende, auf das verstellbare Element der Verstellmittel wirkende Hemm- bzw. Blockier- oder Arretierkraft einstellbar. Immer dann, wenn die blockierende bzw. hemmende Kraft größer ist als die auf das verstellbare Element wirkende Schließkraft, wird von den Verstellmitteln keine Energie zum Offenhalten der Kupplungsmittel benötigt, wohingegen ein, vorzugsweise nur geringer, Energieaufwand aufgebracht werden muss, wenn die Blockier- bzw. Hemmkraft (etwas) kleiner ist als die auf das verstellbare Element der Verstellmittel wirkende, von den Schließmitteln verursachte Schließkraft.

Um den Drehmoment-Verstellwegverlauf bei der Verstellung des verstellbaren Elementes und damit beim Verstellen der Kupplungsmittel dynamisch einstellen zu können, umfassen erfindungsgemäß die Verstellmittel einen Spindeltrieb, der mittels eines Elektromotors betätigbar ist. Mit Hilfe des Spindeltriebs ist das verstellbare Element derart verstellbar, dass daraus ein Öffnen der Kupplungsmittel resultiert. Erfindungsgemäß handelt es sich bei dem verstellbaren Element um eine auf einer Spindel durch Verdrehen der Spindel verfahrbare Spindelmutter.

Um mit Hilfe eines kleindimensionierten Antriebes große Verstellkräfte realisieren zu können, ist eine Ausführungsform von Vorteil, bei der das verstellbare Element der Verstellmittel mindestens einen Geberkolben umfasst bzw. als mindestens ein Geberkolben ausgebildet ist, mit dem ein Hydraulikdruck zum Öffnen der Kupplungsmittel aufbaubar ist. Alternativ wirkt das Arretierelement auf einen Nehmerkolben der Verstellmittel.

Von besonderem Vorteil ist eine Ausführungsform, bei der ein, insbesondere als Rückschlagventil ausgebildetes, hydraulisches Ventil vorgesehen ist, welches, insbesondere bei Versagen der Verstellmittel, von einem Steuergerät öffenbar ist. Aus dem Öffnen des Ventils resultiert ein Druckabfall in einem Hydrauliksystem, so dass die von den Schließmitteln aufgewendete Kraft ausreicht, die Kupplungsmittel zu schließen. Das Vorsehen eines derartigen Ventils ist insbesondere dann ratsam, wenn die von den Arretiermitteln aufgebrachte Öffnungskraft die von den Schließmitteln aufgebrachte Schließkraft übersteigt.

Besonders bevorzugt ist eine Kupplung für einen Hybridantrieb, bei der die Kupplungsmittel als Reib-Trockenkupplung ausgebildet sind. Beispielsweise umfasst die Reib-Trockenkupplung mindestens zwei Reibscheiben (insbesondere Reibringe), die durch Verstellen des hydraulischen Geberkolbens zum Öffnen der Kupplung voneinanderweg bewegbar sind.

Ferner führt die Erfindung auf einen Hybridantrieb, insbesondere für ein Kraftfahrzeug, mit einem Verbrennungsmotor der, bzw. dessen Abtrieb, mittels einer wie zuvor beschrieben ausgebildeten, schaltbaren Kupplung mit einem eine elektrische Maschine aufweisenden Antriebsstrang koppelbar und entkoppelbar ist. Bevorzugt handelt es sich bei der Kupplung um eine Startkupplung zum Wieder-Starten des Verbrennungsmotors.

### Kurze Beschreibung der Zeichnungen

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in
- Fig. 1:: eine schematische Darstellung eines Hybridantriebes,
- Fig. 2:: eine an einen Datenbus angeschlossene Startkupplung und
- Fig. 3:: einen schematischen Aufbau von Verstellmitteln (Kupplungsaktuator) für eine Startkupplung.

### Ausführungsformen der Erfindung

In den Figuren sind gleiche Bauteile und Bauteile mit der gleichen Funktion mit den gleichen Bezugszeichen gekennzeichnet.

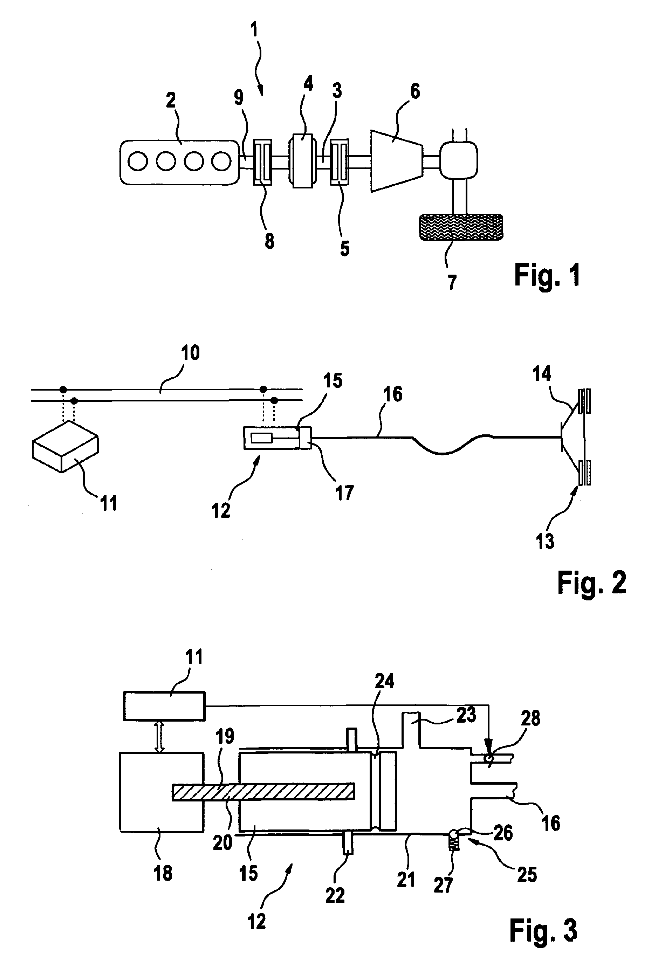

In Fig. 1 ist in einer schematischen Darstellung ein Hybridantrieb 1 (Parallelhybrid) eines Kraftfahrzeugs gezeigt. Der Hybridantrieb 1 umfasst einen Verbrennungsmotor 2 sowie einen Teiltriebstrang 3 mit einer je nach Betriebssituation als Elektromotor oder Generator wirkenden elektrischen Maschine 4. Der Teiltriebstrang 3 (Teil des Antriebsstrangs) umfasst eine oder mehrere Wellen. In dem Teiltriebstrang 3 ist eine Anfahrkupplung 5 (z.B. Wandler/Reibkupplung) sowie ein Getriebe 6 angeordnet. Mit Hilfe des Hybridantriebs 1 sind Fahrzeugräder 7 in Rotation versetzbar.

Mittels der als Startkupplung ausgebildeten Kupplung 8 kann der Verbrennungsmotor 2, genauer eine Kurbelwelle 9 (weiterer Teiltriebstrang) des Verbrennungsmotors 2, mit dem die elektrische Maschine 4 aufweisenden Teiltriebstrang 3 gekoppelt oder von diesem entkoppelt werden. Die Kupplung 8 ist im Fehlerfall geschlossen, also als so genannte Normally-Closed-Kupplung ausgebildet, so dass es bei einem Defekt der Kupplung 8 und/oder der elektrischen Maschine 4 weiterhin möglich ist konventionell mit Hilfe des Verbrennungsmotors 2 zu fahren.

Aus Fig. 2 ist die Anbindung der sehr schematisiert dargestellten Kupplung 8 an das Steuersystem eines Kraftfahrzeugs gezeigt. Zu erkennen ist, dass die Kupplung 8 an einen Datenbus 10, hier einen CAN-Bus, des Kraftfahrzeugs angeschlossen und über diesen mit einem Steuergerät 11 verbunden ist. Über das Steuergerät 11 kann Einfluss auf Verstellmittel 12 der Kupplung 8 genommen werden, mit deren Hilfe als Trocken-Reibkupplung ausgebildete Kupplungsmittel 13 entgegen einer Schließkraft öffenbar sind, wodurch der in Fig. 1 gezeigte Verbrennungsmotor 2 von dem Teiltriebstrang 3 entkoppelt wird. In dem gezeigten Ausführungsbeispiel wird die auf die Kupplungsmittel 13 wirkende Schließkraft von als Tellerfeder ausgebildeten Schließmitteln 14 erzeugt, die einem Öffnen der Kupplungsmittel 13 entgegenwirken. Zum Verstellen der Kupplungsmittel 13, d. h. zum Öffnen der Kupplungsmittel 13 umfassen die Verstellmittel 12 ein als Geberkolben ausgebildetes verstellbares Element 15, welches über eine Hydraulikleitung 16 mit einem nicht gezeigten Nehmerzylinder der Kupplungsmittel 13 gekoppelt ist, derart dass durch Druckbeaufschlagung eines Hydrauliköls 17 mittels des verstellbaren Elementes 15 eine Öffnung der Kupplungsmittel 13 resultiert.

In Fig. 3 ist ausschnittsweise in einer schematischen Darstellung das Vertellmittel 12 gezeigt. Nicht zu erkennen sind die in an sich bekannter Weise ausgebildeten, schematisch in Fig. 2 gezeigten Kupplungsmittel 13 und die Hydraulikleitung 16.

In Fig. 2 ist zu erkennen, dass die Verstellmittel 12 zum Öffnen der Kupplungsmittel 13 einen als bürstenloser Gleichstrommotor ausgebildeten Elektromotor 18 zum Betreiben eines Spindeltriebes 19 umfassen. Mit Hilfe des Elektromotors 18 ist eine als Gewindespindel ausgebildete Spindel 20 in Rotation versetzbar, wodurch das als Geberkolben ausgebildete, verstellbare Element 15, welches gleichzeitig als Spindelmutter dient und mit einem Innengewinde in einem drehmomentübertragenden Eingriff mit der Spindel 20 ist, in axialer Richtung rotierend verstellbar ist.

Zum Abdichten des Zylinders 21 ist in diesem Ausführungsbeispiel eine am Außenumfang des zylindrischen, verstellbaren Elementes 15 anliegende Ringdichtung 22 vorgesehen. Der Elektromotor 18 wird über das Steuergerät 11 angesteuert, so dass mit Hilfe des Elektromotors 18 eine gesteuerte Verstellbewegung des verstellbaren Elementes 15, insbesondere zum ruckelfreien Starten des Verbrennungsmotors 2 möglich ist. Durch Verdrehen der Spindel 20 wird das als Geberkolben ausgebildete verstellbare Element 15 in den Zylinder 21 hineinverstellt, wodurch sich innerhalb des Zylinders 21 Druck aufbaut und dieser über die Hydraulikleitung 16 zu den Kupplungsmitteln 13, genauer zu einem an den Kupplungsmitteln 13 angeordneten Nehmerzylinder der Verstellmittel 12 übertragen wird, der bei Druckbeaufschlagung die Kupplungsmittel 13 öffnet.

Um Volumenveränderungen des Hydrauliköls 17 (Betriebsmedium) z.B. durch Änderung der Hydrauliköltemperatur auszugleichen, ist der Zylinder 21 mit einem Anschluss 23 (Schnüffelloch) versehen, der zu einem nicht gezeigten Ausgleichsbehälter führt. Der Anschluss 23 ist im Betrieb regelmäßig freigegeben.

Das als Geberkolben ausgebildete, verstellbare Element 15 weist in einem vorderen, dem Elektromotor 18 abgewandten Bereich eine als umfangsgeschlossene Nut ausgebildete Ausnehmung 24 auf, die zum Zusammenwirken mit Arretiermitteln 25 ausgebildet ist. In dem gezeigten Ausführungsbeispiel umfassen die Arretiermittel 25 ein senkrecht zur Verstellrichtung des verstellbaren Elementes 15 verstellbares, als Kugel ausgebildetes, Arretierelement 26, das mit Hilfe einer Feder 27 in radialer Richtung nach innen in den Zylinder 21 hinein federkraftbeaufschlagt ist.

Die Verstellmittel 12 sind derart ausgebildet, dass die Kupplungsmittel 13 (vgl. Fig. 2) vollständig geöffnet sind, wenn das als Geberzylinder ausgebildete verstellbare Element 15 nahezu vollständig in den Zylinder 21 in der Zeichnungsebene nach rechts hineinverstellt ist. In dieser Öffnungsposition der Kupplungsmittel 13 ist das Arretierelement 26 formschlüssig in der Ausnehmung 24 des verstellbaren Elementes 15 aufgenommen und hemmt oder blockiert, je nach Ausführungsform, eine Verstellbewegung des verstellbaren Elementes 15 in der Zeichnungsebene nach links, aus der ein Druckabfall im Zylinder 21 und damit eine Schließbewegung der Kupplungsmittel 13 resultieren würde. Die hemmende bzw. blockierende, auf das verstellbare Element 15 wirkende Kraft kann über die Tiefe und die Form der als Ringnut ausgebildeten Ausnehmung 24, die Federkraft der Feder 27 und die Form der mit der Ausnehmung 24 zusammenwirkenden Spitze des Arretierelementes 26 eingestellt werden. Die auf das verstellbare Element 15, aus der Federkraft der Schließmittel 14 resultierende, wirkende Kraft errechnet sich über die hydraulische Übersetzung aus der Federkraft, die die als Tellerfeder ausgebildeten Schließmittel 14 in den Kupplungsmitteln 13 in deren Öffnungsposition aufbringt.

Wie weiterhin aus Fig. 3 zu erkennen ist, ist dem hydraulischen System, genauer dem Zylinder 21, ein steuerbares hydraulisches Ventil 28 zugeordnet, das über das Steuergerät 11 ansteuerbar ist. Stellt das Steuergerät 11 beispielsweise einen Defekt des Elektromotors 18 fest, so wird von dem Steuergerät 11 ein Öffnen des Ventils 28 bewirkt, wodurch Hydrauliköl 17 aus dem Zylinder 21 abströmen kann, mit der Folge, dass der Druck im hydraulischen System, genauer im Zylinder 21, der Hydraulikleitung 16 und im nicht gezeigten Nehmerzylinder abfällt, und in der Folge die Schließkraft der Schließmittel 14 die hydraulischen Druckkräfte übersteigt und somit die Kupplungsmittel 13 geschlossen werden. Im Falle einer Leitungsleckage ist die Anforderung des "normally closed" ebenfalls erfüllt, da die Schließmittel 14 das Hydrauliköl 17 aus dem Hydraulikzylinder 21 auch dann herausdrücken und in der Folge die Kupplungsmittel 13 schließt.

Je nach Ausbildung der Arretiermittel 25, genauer der Ausnehmung 24, des Arretierelementes 26 und/oder der Feder 27 kann die hemmende bzw. blockierende, auf das verstellbare Element 15 wirkende, Kraft derart eingestellt werden, dass diese größer ist als die auf das verstellbare Element 15 wirkende, von den Schließmitteln 14 verursachte, Kraft. In diesem Fall kann der Elektromotor 18 bei geöffneten Kupplungsmitteln 13 abgeschaltet werden, so dass kein Haltestrom verbraucht wird. Alternativ ist es möglich, die auf das verstellbare Element 15 wirkende, hemmende Kraft so einzustellen, dass diese etwas geringer ist als die von den Schließmitteln 14 verursachte, auf das verstellbare Element 15 wirkende, Kraft, so dass der Elektromotor 18 die Kupplungsmittel 13 mit einem nur geringen Haltestrom offenhalten kann.

## Patentansprüche

1. Schaltbare Kupplung, insbesondere Startkupplung (8) zum drehmomentübertragenden Koppeln und Entkoppeln eines Verbrennungsmotors (2) mit einem, eine elektrische Maschine aufwelsenden, Teiltriebstrang (3), wobei die Kupplung (8) mindestens ein verstellbares Element (15) umfassende Verstellmittel (12) aufweist, mit denen Kupplungsmittel (13) entgegen einer von Schließmitteln (14) erzeugten Schließkraft öffnenbar sind,
wobei
mit dem verstellbaren Element (15) zusammenwirkende, ein verstellbares Arretierelement (26) aufweisende, Arretiermittel (25) vorgesehen sind, die derart mit dem verstellbaren Element (15) zusammenwirken, dass die Kupplungsmittel (13) offengehalten werden, ohne dass hierfür eine Öffnungskraft von den Verstellmitteln (12) aufgebracht werden muss, oder derart, dass die von den Verstellmitteln (12) aufzubringende Öffnungskraft zum Offenhalten der Kupplungsmittel (13) reduziert wird, **dadurch gekennzeichnet, dass** das versteilbare Element (15) mittels eines mit einem Elektromotor (18) betätigbaren Spindeltriebs (19) verstellbar ist, und es sich bei dem verstellbaren Element um eine auf einer Spindel durch Verdrehen der Spindel verfahrbare Spindelmutter handelt.

2. Kupplung nach Anspruch 1.
**dadurch gekennzeichnet,**
**dass** das Arretierelement (25) zwischen einer Formschlussposition, in der es formschlüssig mit dem verstellbaren Element (15) zusammenwirkt, und einer Freigabeposition verstellbar ist

3. Kupplung nach Anspruch 2,
**dadurch gekennzeichnet,**
**dass** das Arretierelement (26) in Richtung des verstellbaren Elementes (15) federkraftbeaufschlagt ist.

4. Kupplung nach einem der vorhergehenden Ansprüche,
**dadurch gekennzeichnet,**
**dass** das, vorzugsweise bolzenförmige oder kugelförmige, Arretierelement (26) in eine Ausnehmung (24) des verstellbaren Elementes (15) verstellbar ist.

5. Kupplung nach Anspruch 4,
**dadurch gekennzeichnet,**
**dass** die Ausnehmung (24) als Nut, vorzugsweise als um das verstellbare Element (15) umlaufende Umfangsnut, ausgebildet ist.

6. Kupplung nach einem der Ansprüche 4 oder 5,
**dadurch gekennzeichnet,**
**dass** zumindest eine Kontaktfläche zwischen dem Arretierelement (26) und der Ausnehmung (24) vorgesehen ist, die derart, vorzugsweise schräg oder gebogen, ausgeformt ist, dass aus der Schließkraft der Schließmittel (14) eine schräg zur Verstellrichtung des verstellbaren Elementes (15) auf das Arretierelement (26) wirkende Kraft resultiert.

7. Kupplung nach einem der vorhergehenden Ansprüche,
**dadurch gekennzeichnet,**
**dass der Elektromotor (18) bei geöffneten Kupplungsmitteln (13) abgeschaltet wird, so dass kein Haltestrom verbraucht wird.**

8. Kupplung nach einem der vorhergehenden Ansprüche,
**dadurch gekennzeichnet,**
**dass** das verstellbare Element (15) ein hydraulischer Geberkolben oder ein hydraulischer Nehmerkolben ist.

9. Kupplung nach einem der vorhergehenden Ansprüche,
**dadurch gekennzeichnet,**
**dass** ein steuerbares hydraulisches Ventil (28), insbesondere ein Rückschlagventil, vorgesehen ist, das bei Versagen der Verstellmittel (12) von einem Steuergerät (11) öffenbar ist, so dass die Schließmittel (14) die Kupplungsmittel (13) schließen können.

10. Kupplung nach einem der vorhergehenden Ansprüche,
**dadurch gekennzeichnet,**
**dass** die Kupplungsmittel (13) als Reib-Trockenkupplung ausgebildet sind.

11. Hybridantrieb, insbesondere für ein Kraftfahrzeug, mit einem Verbrennungsmotor (2), der mittels einer schaltbaren Kupplung (8) mit einem eine elektrische Maschine aufweisenden Teiltriebstrang (3) koppelbar und entkoppelbar ist,
**dadurch gekennzeichnet,**
**dass** die Kupplung (8) nach einem der vorhergehenden Ansprüche ausgebildet ist.

## Claims

1. Switchable clutch, in particular starting clutch (8) for the torque-transmitting coupling and decoupling of an internal combustion engine (2) to a part drive train (3) which has an electric machine, the clutch (8) having adjusting means (12) which comprise at least one adjustable element (15) and by way of which clutch means (13) can be opened counter to a closing force which is generated by closing means (14), locking means (25) which interact with the adjustable element (15) and have an adjustable locking element (26) being provided, which locking means (25) interact with the adjustable element (15) in such a way that the clutch means (13) are held open, without it being necessary for an opening force to be applied for this purpose by the adjusting means (12), or in such a way that the opening force to be applied by the adjusting means (12) for holding the clutch means (13) open is reduced, **characterized in that** the adjustable element (15) can be adjusted by means of a spindle drive (19) which can be actuated with an electric motor (18), and the adjustable element is a spindle nut which can be moved on a spindle by rotation of the spindle.

2. Clutch according to Claim 1, **characterized in that** the locking element (26) can be adjusted between a positively locked position, in which it interacts with the adjustable element (15) in a positively locking manner, and a released position.

3. Clutch according to Claim 2, **characterized in that** the locking element (26) is loaded with spring force in the direction of the adjustable element (15).

4. Clutch according to one of the preceding claims, **characterized in that** the locking element (26) which is preferably pin-shaped or ball-shaped can be adjusted into a recess (24) of the adjustable element (15).

5. Clutch according to Claim 4, **characterized in that** the recess (24) is configured as a groove, preferably as a circumferential groove which runs around the adjustable element (15).

6. Clutch according to either of Claims 4 and 5, **characterized in that** at least one contact face is provided between the locking element (26) and the recess (24), which contact face is shaped, preferably in an oblique or curved manner, in such a way that a force which acts on the locking element (26) obliquely with respect to the adjusting direction of the adjustable element (15) results from the closing force of the closing means (14).

7. Clutch according to one of the preceding claims, **characterized in that** the electric motor (18) is switched off when clutch means (13) are open, with the result that no holding current is used.

8. Clutch according to one of the preceding claims, **characterized in that** the adjustable element (15) is a hydraulic master piston or a hydraulic slave piston.

9. Clutch according to one of the preceding claims, **characterized in that** a controllable hydraulic valve (28), in particular a non-return valve, is provided which can be opened by a control unit (11) if the adjusting means (12) fail, with the result that the closing means (14) can close the clutch means (13).

10. Clutch according to one of the preceding claims, **characterized in that** the clutch means (13) are configured as a dry friction clutch.

11. Hybrid drive, in particular for a motor vehicle, having an internal combustion engine (2) which can be coupled and decoupled by means of a switchable clutch (8) to a part drive train (3) which has an electric machine, **characterized in that** the clutch (8) is configured according to one of the preceding claims.

## Revendications

1. Embrayage commutable, en particulier embrayage de démarrage (8) pour l'accouplement avec transfert de couple et le désaccouplement d'un moteur à combustion interne (2) à une chaîne cinématique partielle (3) présentant une machine électrique, l'embrayage (8) présentant des moyens de réglage (12) comprenant au moins un élément réglable (15), avec lesquels des moyens d'embrayage (13) peuvent être ouverts à l'encontre d'une force de fermeture produite par des moyens de fermeture (14),
dans lequel
des moyens de blocage (25) coopérant avec l'élément réglable (15), présentant un élément de blocage réglable (26), sont prévus, lesquels coopèrent avec l'élément réglable (15) de telle sorte que les moyens d'embrayage (13) soient maintenus ouverts, sans qu'une force d'ouverture ne doive être appliquée à cet effet par les moyens de réglage (12), ou de telle sorte que la force d'ouverture à appliquer par les moyens de réglage (12) pour maintenir ouvert les moyens d'embrayage (13) soit réduite,
**caractérisé en ce que** l'élément réglable (15) peut être réglé au moyen d'une commande de broche (19) pouvant être actionnée par un moteur électrique (18), et l'élément réglable est un écrou de broche déplaçable sur une broche par rotation de la broche.

2. Embrayage selon la revendication 1,
**caractérisé en ce que**
l'élément de blocage (26) peut être réglé entre une position d'engagement par correspondance géométrique dans laquelle il coopère par engagement par correspondance géométrique avec l'élément réglable (15) et une position de libération.

3. Embrayage selon la revendication 2,
**caractérisé en ce que**
l'élément de blocage (26) est sollicité par une force de ressort dans la direction de l'élément réglable (15).

4. Embrayage selon l'une quelconque des revendications précédentes,
**caractérisé en ce que**
l'élément de blocage (26) de préférence en forme de boulon ou de bille peut être déplacé dans un évidement (24) de l'élément réglable (15).

5. Embrayage selon la revendication 4,
**caractérisé en ce que**
l'évidement (24) est réalisé sous forme de rainure, de préférence sous forme de rainure périphérique entourant l'élément réglable (15).

6. Embrayage selon l'une quelconque des revendications 4 ou 5,
**caractérisé en ce**
**qu'**au moins une surface de contact entre l'élément de blocage (26) et l'évidement (24) est prévue, laquelle est façonnée de préférence obliquement ou de manière courbée de telle sorte qu'il résulte de la force de fermeture des moyens de fermeture (14) une force agissant sur l'élément de blocage (26) obliquement par rapport à la direction de réglage de l'élément réglable (15).

7. Embrayage selon l'une quelconque des revendications précédentes, **caractérisé en ce que**
le moteur électrique (18) est coupé lorsque les moyens d'embrayage (13) sont ouverts, de telle sorte qu'aucun courant de maintien ne soit consommé.

8. Embrayage selon l'une quelconque des revendications précédentes,
**caractérisé en ce que**
l'élément réglable (15) est un maître-piston hydraulique ou un piston récepteur hydraulique.

9. Embrayage selon l'une quelconque des revendications précédentes,
**caractérisé en ce**
**qu'**une soupape hydraulique commandable (28), en particulier une soupape de non retour est prévue, laquelle, lors d'une défaillance des moyens de réglage (12) d'un appareil de commande (11) peut être ouverte de telle sorte que les moyens de fermeture (14) puissent fermer les moyens d'embrayage (13).

10. Embrayage selon l'une quelconque des revendications précédentes,
**caractérisé en ce que**
les moyens d'embrayage (13) sont réalisés sous forme d'embrayage à friction sec.

11. Entraînement hybride, en particulier pour un véhicule automobile, comprenant un moteur à combustion interne (2) qui peut être accouplé à une chaîne cinématique partielle (3) présentant une machine électrique et désaccouplé de celle-ci, au moyen d'un embrayage (8) commutable, **caractérisé en ce que**
l'embrayage (8) est réalisé selon l'une quelconque des revendications précédentes.
